# EUROPEAN PATENT APPLICATION

(11) **EP 2 922 337 A1**
(43) Date of publication of application: **23.09.2015**
(21) Application number: 12888518.3
(22) Date of filing: 28.12.2012
(51) Int. Cl.: H04W 28/10, H04W 88/18

(54) **METHOD FOR DISTINGUISHING TYPE OF COMMUNICATION NETWORK AND METHOD FOR PROVIDING CONTENT USING SAME**

(30) Priority: 15.11.2012 KR 20120129299
(71) Applicant: Cdnetworks Co., Ltd., Seoul 135-935 (KR)
(72) Inventor: CHOI, Jun-Ho, Seoul (KR); AHN, Sang-Joon, Seoul (KR)
(74) Representative: Rees, Simon John Lewis
(86) International application number: PCT/KR2012/011800
(87) International publication number: WO 2014/077458

(57) **Abstract**

A method of determining the type of communication network is disclosed. The method of determining the type of communication network is comprising, measuring latency between the content server and a device that has made a content transmission request; determining whether or not the measured latency is longer than a predetermined reference; and determining the content transmission request to be a content transmission request over the mobile communication network if it is determined that the latency is longer than the predetermined reference.

## Description

### BACKGROUND OF THE INVENTION

### 1. Field of the Invention

The present invention relates generally to a method of determining the type of communication network and a method of providing content using the same and, more particularly, to a method that is capable of determining the type of communication network using latency and then providing content based on the type of communication network.

### 2. Description of the Related Art

With the popularization of various types of handheld terminals, such as smart phones, tablet computers, touch pads, and laptop computers, thanks to the development of mobile communication technology, not only Internet access over a mobile communication network but also Internet access over conventional wired/wireless Internet communication networks has considerably increased.

For ease of description, a communication network over which the Internet is accessed without the intervention of a mobile communication network is hereinafter referred to as an "Internet communication network."

Meanwhile, a mobile communication network has a relatively lower data transfer rate than the Internet communication network because of the characteristics of the network, and may generate the difference in a screen on which data is displayed or the difference in the data processing time because of the characteristics of devices, such as smart phones and touch pads, that is, a plurality of devices using the mobile communication network.

Accordingly, there is a need to distinguish between Internet access over a mobile communication network and access over an Internet communication network even in the case of the same content and then apply different technology for sending content in a different format or more rapidly sending data based on the type of communication network.

Although a content server has been mentioned in the above description, any server for transmitting and receiving data so that the data is displayed on a user-side terminal may be referred to as a "content server." A content server may also be referred to as another name, such as a web server or a data server, but such a server herein is referred to as a content server for ease of description.

In line with such a necessity, recently, content itself is separately fabricated as content for mobile communication, or a separate content server for a mobile communication network is managed.

In order to manage a separate content server, however, problems arise in that additional cost and management are required from the view of point of a content provider and a lot of cost and time are required for the synchronization of content so that the same content is provided by a content server for a mobile communication network and a content server for an Internet communication network.

Furthermore, if a single content server is managed without the management of an additional content server, problems arise in that the difference in the screen on which data is displayed or the difference in the data processing time may occur due to the characteristics of a plurality of devices using a mobile communication network, such as smart phones and touch pads.

Currently, when a content server provides content based on the type of communication network, a method of directly accessing the content server, provided over a mobile communication network, using a dedicated program, that is, an application for a smart phone, is most widely used.

Another method is a method in which a client accesses a mobile content-dedicated server that provides content provided over a mobile communication network, that is, content frequently referred to as mobile content.

Still another method is a method in which a client selects and requests mobile content upon making a content transmission request.

In all the methods, however, a user has to install a separate program on a client, a user has to access a separate content server via a client, or a user has to request separate content via a client. That is, information about the type of communication network is provided to a content server in response to the selection of a client side.

Accordingly, if a single content server is managed or a user does not install a separate program on a client, a problem arises in that it is difficult to distinguish between a mobile communication network and an Internet communication network and send content in accordance with the type of communication network.

### SUMMARY OF THE INVENTION

Accordingly, the present invention has been made keeping in mind the above problems occurring in the prior art, and an object of the present invention is to provide a method of determining the type of communication network and a method of providing content using the same, which are capable of distinguishing between a mobile communication network and an Internet communication network even when a separate program is not installed on a client in order to request content or even when a separate content server for a mobile communication network is not managed.

Another object of the present invention is to provide a method of determining the type of communication network and a method of providing content using the same, which are capable of distinguishing between a mobile communication network and an Internet communication network and also providing content while managing a single content server.

Still another object of the present invention is to provide a method of determining the type of communication network and a method of providing content using the same, which are capable of distinguishing between a mobile communication network and an Internet communication network, thereby more rapidly providing content and also providing content in a different format based on the type of communication network.

Other objects of the present invention will be readily apparent from descriptions of the following embodiments.

In order to achieve the above objects, in accordance with an aspect of the present invention, there is provided a method of determining the type of communication network.

In accordance with an embodiment of the present invention, there is provided a method of determining the type of communication network, the method being performed by a content server connected to a mobile communication network and an Internet communication network and configured to provide content, the method including measuring latency between the content server and a device that has made a content transmission request; determining whether or not the measured latency is longer than a predetermined reference; and determining the content transmission request to be a content transmission request over the mobile communication network If it is determined that the latency is longer than the predetermined reference.

Measuring the latency between the content server and the device that has made the content transmission request may include extracting an Internet protocol (IP) address included in the content transmission request; determining whether or not the IP address is included in previously stored IP address information; and measuring the latency If it is determined that the IP address is not included in the previously stored IP address information.

Furthermore, the information about a previously stored IP address may include information about a communication network service provider mapped to the previously stored IP address. In this case, whether the content transmission request is a content transmission request over the mobile communication network or a content transmission request over the Internet communication network may be determined.

Determining the content transmission request to be a content transmission request over the mobile communication network If it is determined that the latency is longer than the predetermined reference may include determining the content transmission request to be a content transmission request over the Internet communication network If it is determined that the measured latency is equal to or shorter than the predetermined reference.

Determining whether or not the measured latency is longer than the predetermined reference may include determining whether or not the measured latency is longer than the predetermined reference and determining whether or not at least one of the maximum segment size (MSS) and the maximum transfer size (MTU) related to the content server and the device that has made the content transmission request is larger than a predetermined reference.

In accordance with another aspect of the present invention, there is provided a method of providing content.

In accordance with an embodiment of the present invention, there is provided a content provision apparatus of providing content based on the type of communication network that has been determined in determining the type of communication network.

Determining the type of communication network may include, If it is determined that the content transmission request is a content transmission request over the mobile communication network, selecting data transfer acceleration technology to which a data transfer acceleration algorithm suitable for the mobile communication network has been applied, and transmitting content using the selected data transfer acceleration technology.

Furthermore, the data transfer acceleration algorithm suitable for the mobile communication network may be a delay-based TCP congestion control algorithm.

Determining the type of communication network may include, If it is determined that the content transmission request is a content transmission request over the Internet communication network, selecting a data transfer acceleration technology to which a data transfer acceleration algorithm suitable for the Internet communication network has been applied, and transmitting content using the selected data transfer technology.

Furthermore, the data transfer acceleration algorithm suitable for the Internet communication network may be a loss-based TCP congestion control algorithm.

Determining the type of communication network may include, If it is determined that the content transmission request is the content transmission request over the mobile communication network, selecting content having a quarter video graphic array (QVGA) format, and transmitting the content having the selected format.

Determining the type of communication network may include, If it is determined that the content transmission request is the content transmission request over the Internet communication network, selecting one of content having a high definition (HD) format and content having a standard definition (SD) format, and transmitting the content having the selected format.

In accordance with another aspect of the present invention, there is provided an apparatus for determining the type of communication network.

In accordance with an embodiment of the present invention, there is provided an apparatus for determining the type of communication network, the apparatus being connected to a content providing apparatus connected to a mobile communication network and an Internet communication network and configured to provide content, the apparatus including a latency measurement unit configured to measure latency between the content providing apparatus and a device that has made a content transmission request, and a communication network type determination unit configured to determine whether or not the measured latency is longer than a predetermined reference and to determine the content transmission request to be a content transmission request over the mobile communication network If it is determined that the latency is longer than the predetermined reference.

The apparatus for determining the type of communication network may further include an IP address storage unit configured to previously store IP address information. The latency measurement unit may extract an IP address included in the content transmission request, may determine whether or not the extracted IP address is included in the IP address information previously stored in the IP address storage unit, and may measure the latency If it is determined that the extracted IP address is not included in the previously stored IP address information.

Furthermore, the IP address storage unit may store information about a communication network service provider that is mapped to the extracted IP address, and the communication network type determination unit may determine whether the content transmission request is a content transmission request over the mobile communication network or a content transmission request over the Internet communication network based on the extracted IP address.

The communication network type determination unit may determine the content transmission request to be a content transmission request over the Internet communication network If it is determined that the latency measured by the latency measurement unit is equal to or shorter than the predetermined reference.

The communication network type determination unit may determine whether or not the measured latency is longer than the predetermined reference and whether or not at least one of the maximum segment size (MSS) and the maximum transfer size (MTU) related to the content server and the device that has made the content transmission request is larger than a predetermined reference.

In accordance with still another aspect of the present invention, there is provided a content provision apparatus.

In accordance with an embodiment of the present invention, content is provided in accordance with the type of communication network that has been determined by the apparatus for determining the type of communication network.

If, as a result of the determination of the communication network type determination unit, it is determined that the content transmission request is a content transmission request over the mobile communication network, data transfer acceleration technology to which a data transfer acceleration algorithm suitable for the mobile communication network has been applied may be selected, and content may be transmitted using the selected data transfer acceleration technology.

Furthermore, the data transfer acceleration algorithm suitable for the mobile communication network may be a delay-based TCP congestion control algorithm.

If, as a result of the determination of the communication network type determination unit, it is determined that the content transmission request is a content transmission request over the Internet communication network, a data transfer acceleration technology to which a data transfer acceleration algorithm suitable for the Internet communication network has been applied may be selected, and content may be transmitted using the selected data transfer technology.

Furthermore, the data transfer acceleration algorithm suitable for the Internet communication network may be a loss-based TCP congestion control algorithm.

If, as a result of the determination of the communication network type determination unit, it is determined that the content transmission request is a content transmission request over the mobile communication network, content having a QVGA format may be selected, and the content having the selected format may be transmitted.

If, as a result of the determination of the communication network type determination unit, it is determined that the content transmission request is a content transmission request over the Internet communication network, one of content having an HD format and content having an SD format may be selected, and the content having the selected format may be transmitted.

In accordance with still another aspect of the present invention, there is provided a recording medium on which a program for implementing a method of determining the type of communication network has been recorded.

In accordance with an embodiment of the present invention, a recording medium on which a program for implementing a method of determining the type of communication network, the method being performed by a content server connected to a mobile communication network and an Internet communication network and configured to provide content, has been recorded, the method including measuring latency between the content server and a device that has made a content transmission request; determining whether or not the measured latency is longer than a predetermined reference; and determining the content transmission request to be the content transmission request over the mobile communication network If it is determined that the latency is longer than the predetermined reference.

Measuring the latency between the content server and the device that has made the content transmission request may include extracting an IP address included in the content transmission request, determining whether or not the IP address is included in information about a previously stored IP address, and measuring the latency If it is determined that the IP address is not included in the previously stored IP address information.

Furthermore, the information about the previously stored IP address may include information about a communication network service provider that is mapped to the previously stored IP address. In this case, whether the content transmission request is a content transmission request over the mobile communication network or a content transmission request over the Internet communication network may be determined.

Determining the content transmission request to be a content transmission request over the mobile communication network If it is determined that the latency is longer than the predetermined reference may include determining the content transmission request to be a content transmission request over the Internet communication network If it is determined that the measured latency is equal to or shorter than the predetermined reference.

Determining whether or not the measured latency is longer than the predetermined reference may include determining whether or not the measured latency is longer than the predetermined reference and determining whether or not at least one of the maximum segment size (MSS) and the maximum transfer size (MTU) related to the content server and the device that has made the content transmission request is larger than a predetermined reference.

In accordance with still another aspect of the present invention, there is provided a recording medium having a program for implementing the method of providing content recorded thereon.

In accordance with an embodiment of the present invention, there is provided a recording medium having a program recorded thereon, the program implementing a content provision apparatus of providing content in accordance with the type of communication network determined by a method of determining the type of communication network, the method of determining the type of communication network being performed by a recording medium on which the program for implementing the method of determining the type of communication network has been recorded.

Determining the type of communication network may include, If it is determined that the content transmission request is a content transmission request over the mobile communication network, selecting data transfer acceleration technology to which a data transfer acceleration algorithm suitable for the mobile communication network has been applied, and transmitting content using the selected data transfer acceleration technology.

Furthermore, the data transfer acceleration algorithm suitable for the mobile communication network may be a delay-based TCP congestion control algorithm.

Determining the type of communication network may include, If it is determined that the content transmission request is a content transmission request over the Internet communication network, selecting a data transfer acceleration technology to which a data transfer acceleration algorithm suitable for the Internet communication network has been applied, and transmitting content using the selected data transfer technology.

Furthermore, the data transfer acceleration algorithm suitable for the Internet communication network may be a loss-based TCP congestion control algorithm.

Determining the type of communication network may include, If it is determined that the content transmission request is a content transmission request over the mobile communication network, selecting content having a QVGA format, and transmitting the content having the selected format.

Determining the type of communication network may include, If it is determined that the content transmission request is a content transmission request over the Internet communication network, selecting one of content having an HD format and content having an SD format, and transmitting the content having the selected format.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a diagram illustrating the configuration of a content provision system in which both a mobile communication network and an Internet communication network are connected to a content server and to which the present invention may be applied;
FIG. 2 is a flowchart illustrating a method of providing content according to an embodiment of the present invention; and
FIG. 3 is a diagram illustrating the configuration of a content server according to an embodiment of the present invention.

### DESCRIPTION OF THE PREFERRED EMBODIMENTS

The present invention may be modified in various ways, and may be implemented to have several embodiments. Specific embodiments are illustrated in the drawings and described in detail in the following description. It is however to be understood that the present invention is not intended to be limited to the specific embodiments of the present invention but the specific embodiments include all modifications, equivalents and substitutions that fall within the spirit and technical scope of the present invention.

The same reference numbers are used throughout the drawings to refer to the same or like parts. In the following description of the present invention, detailed descriptions of the known functions and configurations will be omitted if it is deemed that they may make the gist of the present invention unnecessarily obscure.

Terms, such as the terms "first" and "second," may be used to describe various elements, but the elements should not be limited by the terms. The terms are used to only distinguish between elements.

For example, a first element may be named a second element without departing from the scope of the present invention. Likewise, a second element may be named a first element.

The term "and/or" includes a combination of a plurality of related and described items, or any one of a plurality of related and described items.

When it is said that one element is "connected" or "coupled" with the other element, it should be understood that one element may be directly connected or coupled with the other element, but a third element may exist between the two elements.

In contrast, when it is said that one element is "directly connected" or "directly coupled" with the other element, it should be understood that a third element does not exist between the two elements.

The terms used in this application are used to only describe specific embodiments, and are not intended to limit the present invention.

A singular expression includes a plural expression unless clearly defined otherwise in the context. In this application, it should be understood that the terms "include," "comprise" and "have" are intended to designate that characteristics, numbers, steps, operations, elements, or parts described in the specification or a combination thereof are present, but are not intended to exclude the presence or possible addition of one or more other characteristics, numbers, steps, operations, elements, parts, or combinations thereof advance.

All terms used herein, including technical or scientific terms, have the same meanings as those typically understood by those skilled in the art unless otherwise defined.

Terms, such as ones defined in common dictionaries, should be construed as having the same meanings as those in the context of related technology, and should not be construed as having ideal or excessively formal meanings unless clearly defined in the present invention.

Embodiments of the present invention are described in more detail with reference to the accompanying drawings. In the description of the present invention, the same reference numerals are used to denote the same elements throughout the drawings, and redundant descriptions of the same elements are omitted.

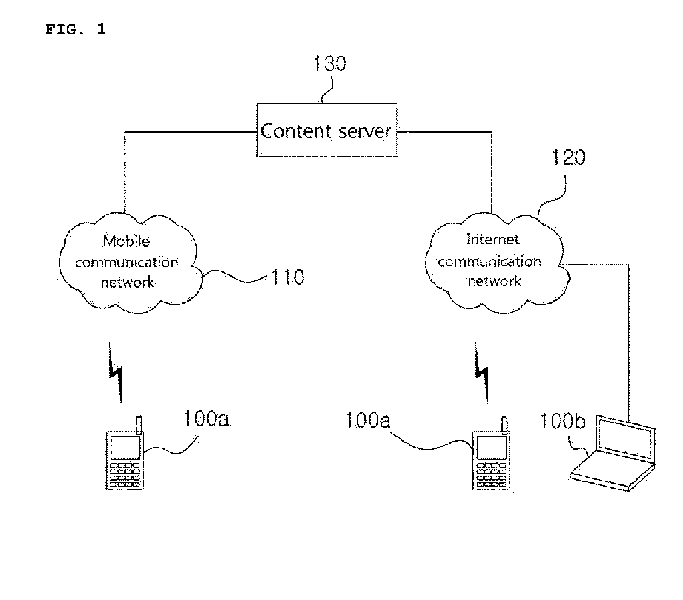

First, the configuration of a content provision system to which the present invention may be applied is described with reference to FIG. 1.

FIG. 1 is a diagram illustrating the configuration of a content provision system in which both a mobile communication network and an Internet communication network are connected to a content server and to which the present invention may be applied.

As illustrated in FIG. 1, in the content provision system to which the present invention may be applied, both the mobile communication network 110 and the Internet communication network 120 are connected to the content server 130.

That is, in an embodiment of the present invention, the content server 130 configured to provide mobile content, that is, content provided over a mobile communication network, is not configured to be separate, unlike in the conventional technology. In contrast, the content server 130 according to an embodiment of the present invention may be connected to both the mobile communication network 110 and the Internet communication network 120 so that content can be received therethrough.

The Internet communication network 120 may be connected to the content server 130 in a wired or wireless way so that content can be received therethrough.

A client connected to the mobile communication network 110 may be a mobile terminal 100a, such as a mobile phone, a smart phone or a touch pad which may access the mobile communication network 110, but is not limited thereto.

The mobile communication network 110 may be classified into second generation (2G), third generation (3G) and fourth generation (4G) networks based on the level of development thereof or technology applied thereto, and may be classified into Global System for Mobile Communications (GSM), Code Division Multiple Access (CDMA) and Long Term Evolution (LTE) networks based on the technical scheme. In the following description, however, the mobile communication network 110 includes all mobile communication networks regardless of the above classification.

When the client accesses the Internet communication network 120 in a wireless manner, the client may access the Internet communication network 120 via the mobile terminal 100a. When the client is connected to the Internet communication network 120 in a wired manner, the client may be a terminal 100b, such as a common personal computer (PC) or a laptop computer which may be connected in a wireless manner, but is not limited thereto.

In an embodiment of the present invention, latency is used to determine the type of communication network.

For this purpose, when a content transmission request is received, the content server 130 measures latency between the content server 130 and a device that has made the content transmission request.

Although the term "measurement of latency" has been used, the Internet protocol (IP) address of the device that has made the content transmission request, together with the content transmission request, may be received from the content server 130.

In an embodiment of the present invention, the type of communication network is determined based on the difference between in latency because the mobile communication network 110 commonly has higher latency than the Internet communication network 120.

That is, if the latency is longer than a predetermined reference, a content transmission request is determined to be a content transmission request over the mobile communication network 110. If the latency is equal to or shorter than the predetermined reference, the content transmission request is determined to be a content transmission request over the Internet communication network 120.

A latency value, that is, a reference based on which the type of communication network is determined, may be previously set through actual measurement.

Although the latency does not vary based only on the type of communication network, it may be seen that the latency converges on a specific value if the latency continues to be measured and the statistics, such as average values and deviations, thereof are computed.

As a result of measuring latency values over the mobile communication network 110 and the Internet communication network 120 that were actually used, it was found that latency over the mobile communication network 110 had a minimum value longer than 20 ms.

Accordingly, if the latency is longer than 20 ms, a content transmission request may be determined to be a content transmission request over the mobile communication network 110.

Furthermore, the speed of the mobile communication network 110 has gradually increased thanks to the development of technology. Recently, 4G mobile communication technology called long term evolution (LTE) has been deployed, in which case it was found that the latency had a minimum value longer than 20 ms.

Furthermore, in the case of 3G mobile communication, it was found that the latency had a minimum value longer than 70 ms. Accordingly, the type of mobile communication network 110 may be determined based on the latency.

Accordingly, if the latency is shorter than 20 ms, a content transmission request in question may be determined to be a content transmission request over the Internet communication network 120. If the latency ranges from 20 ms to 70 ms, a content transmission request may be determined to be a content transmission request over the 4G mobile communication network 110. Furthermore, if the latency exceeds 70 ms, a content transmission request may be determined to be a content transmission request over the 3G mobile communication network 110.

Meanwhile, the latency may vary based on the current state of a communication network or the performance or state of devices connected over a communication network. Accordingly, if the type of communication network is determined based only on the latency, there is a possibility that the type of communication network may not be precisely determined.

In order to avoid the above problem, a method of determining the type of communication network based on not only the latency but also the maximum segment size (MSS) or the maximum transfer sizes (MTU) or both.

In the transfer control protocol (TCP) that is widely used as a transfer protocol, information about the MSS or MTU is exchanged when devices for data transmission are initially connected.

In general, in the case of an Internet communication network, the MSS is set to 1460 bytes. In contrast, in the case of mobile communication networks, such as 3G and LTE networks, the MSS is set to 1400 or 1380 bytes.

In the case of an Internet communication network, in general, if the MSS is set to 1460 bytes, the MTU is set to 1500 octets. In contrast, in the case of a mobile communication network, in general, the MSS is set to 1400 or 1380 bytes, and thus the MTU is set to 1440 or 1420 octets.

Accordingly, whether the type of communication network is a mobile communication network or an Internet communication network may be determined based on the comparison of information about the MSS or MTU.

Therefore, whether the type of communication network is a mobile communication network or an Internet communication network may be determined by comparing the latency, and the MSS or the MTU or both with predetermined references.

Furthermore, if the latency, the MSS and the MTU are used, various methods, such as a method using all of the latency, the MSS and the MTU and a method using one or more of the latency, the MSS and the MTU, may be used. However, the present invention is not limited to a method using the latency, the MSS and the MTU.

The latency, the MSS and the MTU may be set to variable values for various reasons, such as a communication network service provider and the characteristics of devices.

Accordingly, as a method for compensating for the problems that may arise due to the various reasons, a method of storing a so-called "white list," that is, information in which information about IP addresses has been mapped to information about communication service providers, in advance and then determining whether a content transmission request is a content transmission request over the mobile communication network 110 or a content transmission request over the Internet communication network 120 based on the white list is used.

More particularly, an IP address included in a content transmission request is extracted, the extracted IP address is compared with previously stored information, and then whether the extracted IP address is the IP address of a mobile communication service provider or the IP address of an Internet communication network service provider is determined based on the results of the comparison.

However, it is practically impossible to store all the IP addresses of global mobile communication service providers and all the IP addresses of global Internet communication service providers that may access the content server 130.

In particular, while the content server 130 may be accessed over any communication network of any global service provider due to the nature of the Internet, it is not easy to discover and store all the IP addresses of global mobile communication service providers and all the IP addresses of global Internet communication service providers.

Accordingly, first, the type of communication network is determined based on a white list. If it is determined that a content transmission request is a content transmission request using an IP address not included in the white list, the type of communication network may be determined by measuring the latency.

That is, if the type of communication network is determined based on both the white list and the measured latency, a disadvantage that may occur in the case of determining the type of communication network using the white list and a disadvantage that may occur in the case of determining the type of communication network based on the measured latency can be compensated for.

If the type of communication network is determined based on the white list, information about a communication network service provider or the characteristics of a communication network managed by the communication network service provider may also be discovered. Accordingly, differentiated content may be provided based on the information about the communication network service provider or the characteristics of the communication network upon providing content.

That is, if the type of communication network may be determined, that is, if whether the type of communication network is the mobile communication network 110 or the Internet communication network 120 may be determined, as in the present invention, the present invention may be applied to various fields as well as the transmission of content.

For example, a transmission technology or an acceleration algorithm suitable for faster content transmission may be used based on the type of communication network.

Furthermore, although the same content is provided, the content in a different format may be transmitted based on the type of communication network.

For example, in the case of a transfer control protocol (TCP) widely used over the Internet in order to increase the transfer rate of content, an acceleration algorithm for faster data transfer includes a delay-based TCP congestion control algorithm and a loss-based TCP congestion control algorithm.

In general, in the case of the mobile communication network 110, techniques to which loss-based TCP congestion control algorithms, such as BIC and CUBIC, have been applied are overshot upon sending data. Accordingly, high packet loss occurs, and thus deteriorates TCP performance.

Accordingly, in the case of the mobile communication network 110, it is more efficient to use a delay-based TCP congestion control algorithm, such as Vegas.

Furthermore, the transfer rate of content may be increased using various parameters, such as a windows size and a slow start technique, and the detection of retransmission, which determine TCP performance.

For example, faster acceleration performance may be provided by more conservatively performing a slow start technique over the mobile communication network 110 than over the Internet communication network 120.

Furthermore, video data may be provided in a different format according to different coding based on the terminal 100a on which the video data is displayed.

For example, in scalable video coding based on H.264, pieces of content having a high definition (HD) format, a standard definition (SD) format, and a quarter video graphic array (QVGA) format may be simultaneously generated.

QVGA has a pixel configuration of 320 x 240, which corresponds to 1/4 of the resolution of VGA (640×80). QVGA is widely used in a handheld terminal having a small screen like a mobile phone in order to provide optimum resolution. A resolution of 720 × 480 is classified as an SD level, and a resolution of 1,280 × 720 or 1,920 × 1,080 is classified as an HD level.

That is, pieces of content having the HD, SD and QVGA formats may be simultaneously generated by performing scalable video coding on original content within the content server 130 or via an encoding device connected to the content server 130, and content having an appropriate format may be transmitted in accordance with the type of communication network.

For example, a content transmission request over the mobile communication network 110 is commonly a content transmission request using the terminal 100a. In such a case, content having the QVGA format may be transmitted. In the case of a content transmission request over the Internet communication network 120, content having the HD or SD format may be transmitted.

That is, in accordance with a method of determining the type of communication network and a content provision system using the same according to embodiments of the present invention, content may be more rapidly provided because the type of communication network may be determined, and content having a format suitable for the type of communication network may be provided.

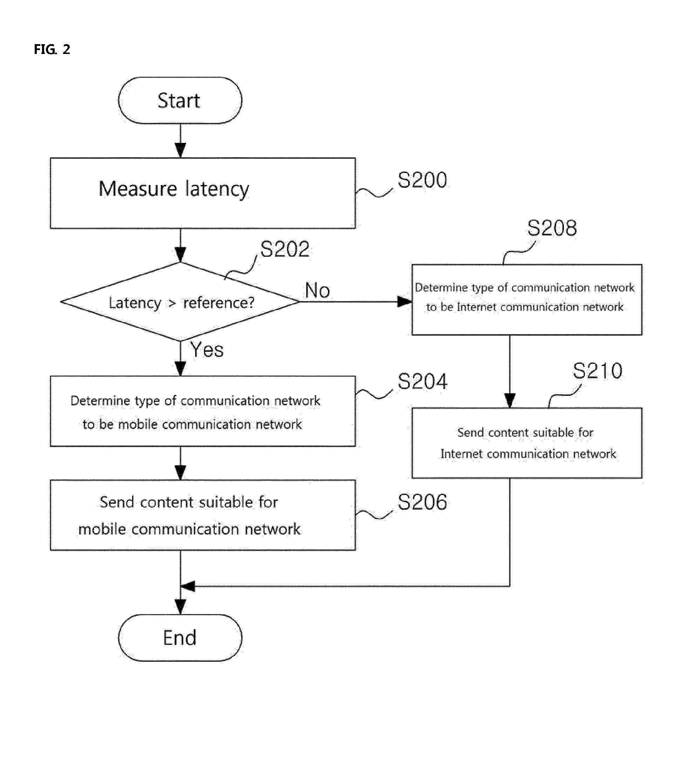

A method of determining the type of communication network and providing content in accordance with the type of communication network according to an embodiment of the present invention is described below with reference to FIG. 2.

FIG. 2 is a flowchart illustrating a method of determining the type of communication network and providing content in accordance with the type of communication network according to an embodiment of the present invention.

As illustrated in FIG. 2, in the method of determining the type of communication network and providing content in accordance with the type of communication network according to this embodiment of the present invention, first, the latency between the content server 130 and a device that has requested the transmission of content is measured at step S200.

The content server 130 may measure the latency through communication with the device that has requested the transmission of the content. Alternatively, as described above, the device that has requested the transmission of the content may send the measured latency together with a content transmission request.

When the latency is measured, whether or not the measured latency is longer than a predetermined reference is determined at step S202.

If, as a result of the determination at step S202, it is determined that the measured latency is longer than the predetermined reference, the content transmission request is determined to be a content transmission request over the mobile communication network 110 at step S204.

In contrast, If it is determined that the measured latency is equal to or shorter than the predetermined reference, the content transmission request is determined to be a content transmission request over the Internet communication network 120 at step S208.

Alternatively, the type of communication network may be determined using a method of comparing at least one of the MSS and the MTU as well as the method using the latency.

Furthermore, the type of communication network may be determined based on at least one of the latency, the MSS and the MTU, as described above.

Although not illustrated in FIG. 2, prior to the determination of the type of communication network based on the measured latency, the IP address of the device having requested the transmission of the content, which is included in the content transmission request, may be extracted. The extracted IP address may be compared with a white list, that is, information in which information about IP addresses has been mapped to information about communication service providers. Whether or not the extracted IP address is included in the white list may be determined based on the results of the comparison.

Furthermore, if, as a result of the comparison, it is determined that the extracted IP address is not included in the white list, the process of measuring latency at step S200 and the process of determining the type of communication network based on the measured latency at step S202 may be performed.

When the type of communication network is determined, content suitable for the type of communication network is transmitted as described above.

That is, if it is determined that the content transmission request is a content transmission request over the mobile communication network 110, content suitable for the mobile communication network 110 is transmitted at step S206. In contrast, if it is determined that the content transmission request is a content transmission request over the Internet communication network 120, content suitable for the mobile communication network 120 is transmitted at step S210.

Accordingly, a TCP acceleration algorithm suitable for the type of communication network may be selected, and the content may be transmitted to the device that has requested the transmission of the content in accordance with the selected TCP acceleration algorithm.

Furthermore, a data format suitable for the type of communication network may be selected, and content having the selected data format may be transmitted to a device that has requested the content.

Furthermore, the method of determining the type of communication network may be configured separately or in conjunction with a method of providing content.

Accordingly, the transmission of content suitable for the type of communication network may include not only the selection of content itself, that is, the selection of the format of content, in accordance with the type of communication network but also selection related to other content transmission-related factors, including the selection of a different method of sending the content, in accordance with the type of communication network.

Furthermore, it is apparent that the method of determining the type of communication network and the method of providing content using the same according to the embodiments of the present invention may be implemented in the form of a program.

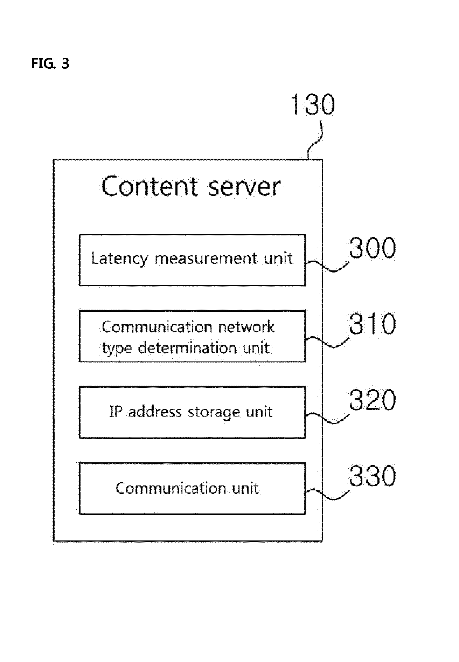

The configuration of a content server when the content server is configured to include an apparatus for determining the type of communication network according to an embodiment of the present invention is described below with reference to FIG. 3.

FIG. 3 is a diagram illustrating the configuration of the content server when the content server is configured to include the apparatus for determining the type of communication network according to an embodiment of the present invention.

As illustrated in FIG. 3, the content server 130 according to this embodiment of the present invention includes a latency measurement unit 300, a communication network type determination unit 310, an IP address storage unit 320, and a communication unit 330.

The latency measurement unit 300 measures the latency between the content server 130 and a device that has requested the transmission of content.

The communication network type determination unit 310 determines the type of communication network to be the Internet communication network 120 if the latency measured by the latency measurement unit 300 is equal to or shorter than a predetermined reference, and determines the type of communication network to be the mobile communication network 110 if the latency measured by the latency measurement unit 300 is longer than the predetermined reference.

The communication network type determination unit 310 may determine the type of communication network not only by comparing the latency measured by the latency measurement unit 300 with the predetermined value but also by comparing at least one of the MSS and the MTU with a predetermined reference.

The IP address storage unit 320 stores a so-called "white list," that is, information in which information about IP addresses has been mapped to information about communication service providers.

The IP address storage unit 320 may be included in the apparatus for determining the type of communication network according to an embodiment of the present invention or in a content server if the type of communication network is determined based on both the measured latency and the white list.

The communication unit 330 is connected to another device forming part of a communication network, and is configured to receive a content transmission request and send content in response to the content transmission request.

The content server 130 according to this embodiment of the present invention may be configured to determine the type of communication network based on latency information that is widely measured or received in a conventional content server.

Furthermore, it will be apparent that the content server may be implemented in the form of a digital processing device, such as a server in which the method of determining the type of communication network and the method of providing content using the same according to the embodiments of the present invention have been implemented in the form of a program and then the program has been installed.

As described above, the method of determining the type of communication network and the method of providing content using the same according to the embodiments of the present invention are advantageous in that a mobile communication network and an Internet communication network can be distinguished from each other even without installing a separate program on a client in order to request content or without managing a separate content server for a mobile communication network.

Furthermore, the methods are advantageous in that a mobile communication network and an Internet communication network can be distinguished from each other using a single content server and content can also be provided using both a mobile communication network and an Internet communication network.

Furthermore, the methods are advantageous in that content can be more rapidly provided because a mobile communication network and an Internet communication network can be distinguished from each other and content in a different format can be provided in accordance with the type of communication network.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of determining the type of communication network, the method being performed by a content server connected to a mobile communication network and an Internet communication network and configured to provide content, comprising:
measuring latency between the content server and a device that has made a content transmission request;
determining whether or not the measured latency is longer than a predetermined reference; and
determining the content transmission request to be a content transmission request over the mobile communication network if it is determined that the latency is longer than the predetermined reference.

2. The method of claim 1, wherein measuring the latency between the content server and the device that has made the content transmission request may include extracting an Internet protocol (IP) address included in the content transmission request; determining whether or not the IP address is included in previously stored IP address information; and measuring the latency If it is determined that the IP address is not included in the previously stored IP address information.

3. The method of claim 2, wherein the information about a previously stored IP address may include information about a communication network service provider mapped to the previously stored IP address, and in this case, whether the content transmission request is a content transmission request over the mobile communication network or a content transmission request over the Internet communication network may be determined.

4. The method of claim 1, wherein determining the content transmission request to be a content transmission request over the mobile communication network If it is determined that the latency is longer than the predetermined reference may include determining the content transmission request to be a content transmission request over the Internet communication network If it is determined that the measured latency is equal to or shorter than the predetermined reference.

5. The method of claim 1, wherein determining whether or not the measured latency is longer than the predetermined reference may include determining whether or not the measured latency is longer than the predetermined reference and determining whether or not at least one of the maximum segment size (MSS) and the maximum transfer size (MTU) related to the content server and the device that has made the content transmission request is larger than a predetermined reference.

6. A method of providing content, the method being performed by a content server connected to a mobile communication network and an Internet communication network, comprising:
measuring latency between the content server and a device that has made a content transmission request;
determining whether or not the measured latency is longer than a predetermined reference;
determining the content transmission request to be a content transmission request over the mobile communication network if it is determined that the latency is longer than the predetermined reference; and
providing content based on the type of communication network that has been determined in determining the type of communication network.

7. The method of claim 6, wherein determining the type of communication network may include, if it is determined that the content transmission request is a content transmission request over the mobile communication network, selecting data transfer acceleration technology to which a data transfer acceleration algorithm suitable for the mobile communication network has been applied, and transmitting content using the selected data transfer acceleration technology.

8. The method of claim 7, wherein the data transfer acceleration algorithm suitable for the mobile communication network may be a delay-based TCP congestion control algorithm.

9. The method of claim 6, wherein determining the type of communication network may include, if it is determined that the content transmission request is a content transmission request over the Internet communication network, selecting a data transfer acceleration technology to which a data transfer acceleration algorithm suitable for the Internet communication network has been applied, and transmitting content using the selected data transfer technology.

10. The method of claim 9, wherein the data transfer acceleration algorithm suitable for the Internet communication network may be a loss-based TCP congestion control algorithm.

11. The method of claim 6, wherein determining the type of communication network may include, if it is determined that the content transmission request is the content transmission request over the mobile communication network, selecting content having a quarter video graphic array (QVGA) format, and transmitting the content having the selected format.

12. The method of claim 6, wherein determining the type of communication network may include, If it is determined that the content transmission request is the content transmission request over the Internet communication network, selecting one of content having a high definition (HD) format and content having a standard definition (SD) format, and transmitting the content having the selected format.

13. An apparatus for determining the type of communication network, the apparatus being connected to a content providing apparatus connected to a mobile communication network and an Internet communication network and configured to provide content, comprising:
a latency measurement unit configured to measure latency between the content providing apparatus and a device that has made a content transmission request, and
a communication network type determination unit configured to determine whether or not the measured latency is longer than a predetermined reference and to determine the content transmission request to be a content transmission request over the mobile communication network If it is determined that the latency is longer than the predetermined reference.

14. The apparatus of claim 13, wherein the apparatus for determining the type of communication network may further include an IP address storage unit configured to previously store IP address information, and the latency measurement unit may extract an IP address included in the content transmission request, may determine whether or not the extracted IP address is included in the IP address information previously stored in the IP address storage unit, and may measure the latency If it is determined that the extracted IP address is not included in the previously stored IP address information.

15. The apparatus of claim 14, wherein the IP address storage unit may store information about a communication network service provider that is mapped to the extracted IP address, and the communication network type determination unit may determine whether the content transmission request is a content transmission request over the mobile communication network or a content transmission request over the Internet communication network based on the extracted IP address.

16. The apparatus of claim 13, wherein the communication network type determination unit may determine the content transmission request to be a content transmission request over the Internet communication network If it is determined that the latency measured by the latency measurement unit is equal to or shorter than the predetermined reference.

17. The apparatus of claim 13, wherein the communication network type determination unit may determine whether or not the measured latency is longer than the predetermined reference and whether or not at least one of the maximum segment size (MSS) and the maximum transfer size (MTU) related to the content server and the device that has made the content transmission request is larger than a predetermined reference.

18. An apparatus for providing a content by determining the type of communication network, the apparatus being connected to a mobile communication network and an Internet communication network, comprising:
a latency measurement unit configured to measure latency between the content providing apparatus and a device that has made a content transmission request, and
a communication network type determination unit configured to determine whether or not the measured latency is longer than a predetermined reference and to determine the content transmission request to be a content transmission request over the mobile communication network If it is determined that the latency is longer than the predetermined reference,
wherein the apparatus provide content based on the type of communication network that has been determined in determining the type of communication network.

19. The apparatus of claim 18, wherein if, as a result of the determination of the communication network type determination unit, it is determined that the content transmission request is a content transmission request over the mobile communication network, data transfer acceleration technology to which a data transfer acceleration algorithm suitable for the mobile communication network has been applied may be selected, and content may be transmitted using the selected data transfer acceleration technology.

20. The apparatus of claim 19, wherein the data transfer acceleration algorithm suitable for the mobile communication network may be a delay-based TCP congestion control algorithm.

21. The apparatus of claim 18, wherein if, as a result of the determination of the communication network type determination unit, it is determined that the content transmission request is a content transmission request over the Internet communication network, a data transfer acceleration technology to which a data transfer acceleration algorithm suitable for the Internet communication network has been applied may be selected, and content may be transmitted using the selected data transfer technology.

22. The apparatus of claim 21, wherein the data transfer acceleration algorithm suitable for the Internet communication network may be a loss-based TCP congestion control algorithm.

23. The apparatus of claim 18, wherein if, as a result of the determination of the communication network type determination unit, it is determined that the content transmission request is a content transmission request over the mobile communication network, content having a QVGA format may be selected, and the content having the selected format may be transmitted.

24. The apparatus of claim 18, wherein if, as a result of the determination of the communication network type determination unit, it is determined that the content transmission request is a content transmission request over the Internet communication network, one of content having an HD format and content having an SD format may be selected, and the content having the selected format may be transmitted.

25. A recording medium on which a program for implementing a method of determining the type of communication network has been recorded, the method being performed by a content server connected to a mobile communication network and an Internet communication network and configured to provide content, has been recorded, comprising:
measuring latency between the content server and a device that has made a content transmission request;
determining whether or not the measured latency is longer than a predetermined reference; and
determining the content transmission request to be the content transmission request over the mobile communication network If it is determined that the latency is longer than the predetermined reference.

26. A recording medium on which a program for implementing a method of providing content, the method being performed by a content server connected to a mobile communication network and an Internet communication network, comprising:
measuring latency between the content server and a device that has made a content transmission request;
determining whether or not the measured latency is longer than a predetermined reference;
determining the content transmission request to be a content transmission request over the mobile communication network if it is determined that the latency is longer than the predetermined reference; and
providing content based on the type of communication network that has been determined in determining the type of communication network.
